# EUROPÄISCHE PATENTSCHRIFT

(11) **EP 1 640 190 B1**
(45) Veröffentlichungstag und Bekanntmachung des Hinweises auf die Patenterteilung: **10.01.2007**
(21) Anmeldenummer: 05450153.1
(22) Anmeldetag: 13.09.2005
(51) Int. Cl.: B60D 1/28, B60D 1/46

(54) **Kupplung**
Trailer hitch
Attelage pour vehicules

(30) Priorität: 24.09.2004 AT 16032004
(43) Veröffentlichungstag der Anmeldung: 29.03.2006
(73) Patentinhaber: Scharmüller, Josef, 4892 Fornach (AT)
(72) Erfinder: Scharmüller, Josef, 4892 Fornach (AT)
(74) Vertreter: Gibler, Ferdinand

(56) Entgegenhaltungen:
- EP-A- 1 216 856
- EP-A- 1 437 241
- US-A1- 2004 155 430

## Beschreibung

Die Erfindung betrifft eine Kupplung, insbesondere Hubkupplung, mit einer Konsole, insbesondere einer Schwenkkonsole, und einem Einschub für die Konsole, wobei der Einschub in der Konsole um seine Längsachse verschiebbar gelagert ist und eine Aufnahme für eine Kupplungskugel aufweist.

Eine derartige Kupplung ist aus der DE 100 65 161 A bekannt. Dort ist eine Hubkupplung mit einer Schwenkkonsole geoffenbart, in die ein Kupplungsteil mit einer Kupplungskugel verbindbar ist. Mit der Anbaukonsole ist ein Niederhalter verbunden. Nachteilig dabei ist, dass die Zugöse während des Kupplungsvorganges von der Kupplungskugel rutschen kann, dass konstruktionsbedingt ein Mindestspiel zwischen der Zugöse und dem Niederhalter vorhanden ist und dass lange Umrüstzeiten für das Umrüsten der Kupplung auf Zugösen mit einem Ring erforderlich sind.

Aufgabe der Erfindung ist es, eine Kupplung der eingangs genannten Art anzugeben, bei der die bekannten Nachteile vermieden sind, die einfach und robust aufgebaut ist, ein sicheres Halten der Zugöse sicherstellt, eine hohe Belastbarkeit aufweist, einfach und schnell wartbar ist und ein schnelles Umrüsten für Anhänger mit einer einen Ring aufweisenden Zugöse ermöglicht, und mit der die Zugöse auch während des Kupplungsvorganges sicher auf der Kupplungskugel gehalten werden kann.

Erfindungsgemäß wird dies dadurch erreicht, dass ein Niederhalterelement an dem Einschub bewegbar, insbesondere verschwenkbar, gelagert ist und dass das Niederhalterelement einen ersten Anschlag umfasst, wobei der erste Anschlag mit einem zweiten Anschlag der Kupplung, vorzugsweise der Konsole, insbesondere der Schwenkkonsole, zusammenwirkt, und dass das Niederhalterelement in einem gekuppelten Zustand der Kupplung mittels der Anschläge in einer eine Zugöse haltenden geschlossenen Position gehalten ist.

Dadurch ergibt sich der Vorteil, dass das Niederhalterelement bei einer Hubkupplung bereits beim Einfahren des Einschubes und noch vor dem Hochschwenken der Schwenkkonsole die Zugöse festhält. Durch eine weitere Betätigungsvorrichtung des Niederhalterelementes, insbesondere eines Seilzuges, kann das Niederhalterelement bereits nach dem Aufsetzen der Zugöse auf die Kupplungskugel beim Kuppelvorgang betätigt werden, wodurch ein sicherer Verbleib der Zugöse auf der Kupplungskugel gewährleistet ist. Durch die Anschläge wird das Niederhalterelement in weiterer Folge fixiert. Das Anbringen des Niederhalterelementes an dem Einschub weist weiters den Vorteil auf, dass alle für das Kuppeln von pfannenförmigen Zugösen erforderlichen Bauteile auf einmal entfernt und/oder montiert werden können, wodurch kurze Umrüstzeiten ermöglicht werden. Weiters weist die erfindungsgemäße Kupplung den Vorteil auf, dass herkömmliche Kupplungen mit einem Haken einfach für den Betrieb mit einer Kupplungskugel umgerüstet werden können. Ein weiterer Vorteil ist, dass die Zugöse im wesentlichen spielfrei gehalten werden kann, wodurch unerwünschte Schwingungen während des Betriebs vermieden werden können und eine hohe Lebensdauer der Kupplung erreicht werden kann.

In Weiterbildung der Erfindung kann vorgesehen sein, dass das Niederhalterelement mittels eines Federelementes in Richtung einer die Zugöse freigebenden offenen Position federbelastet ist, wodurch auf einfache Weise sichergestellt werden kann, dass das Niederhalterelement im ungekuppelten Zustand in der offenen Position ist und die Zugöse freigibt bzw. ein Aufsetzen der Zugöse ermöglicht.

Gemäß einer weiteren Ausführungsform der Erfindung kann vorgesehen sein, dass ein Seilzugmechanismus zum Betätigen des Niederhalterelementes vorgesehen ist. Durch den Seilzugmechanismus kann die Bewegung der Zugöse nach dem Aufsetzen eingeschränkt werden, wodurch ein sicherer Verbleib der Zugöse auf der Kupplungskugel während des Kuppelvorganges sichergestellt werden kann.

In weiterer Ausgestaltung der Erfindung kann vorgesehen sein, dass ein Niederhaltereinsatz zum Eingriff mit der Zugöse in der geschlossenen Position vorgesehen ist und dass der Niederhaltereinsatz lösbar mit dem Niederhalterelement verbunden ist. Dabei kann der Niederhaltereinssatz als Verschleißteil ausgebildet werden, wodurch besonders geringe Wartungs- und Instandhaltungskosten erreicht werden können. Weiters kann das Material des Niederhalterelementes einfach auf unterschiedliche Materialien der Zugöse abgestimmt werden.

In diesem Zusammenhang kann in Weiterführung der Erfindung vorgesehen sein, dass der Niederhaltereinsatz gegenüber dem Niederhalterelement verstellbar ist, wodurch das Spiel zwischen dem Niederhalterelement und der Zugöse auf ein vorgebbares Maß eingestellt werden kann. Insbesondere kann ein allfälliger Verschleiß ausgeglichen werden.

Gemäß einer anderen Ausbildung der Erfindung kann vorgesehen sein, dass der Niederhaltereinsatz gegenüber dem Niederhalterelement gefedert gelagert ist. Durch die Federung kann sichergestellt werden, dass der Niederhaltereinsatz immer an der Zugöse aufliegt und zumindest eine vorgebbare Pressung vorliegt.

In weiterer Ausbildung der Erfindung kann vorgesehen sein, dass der erste Anschlag auf einem Anschlagelement ausgebildet ist und dass das Anschlagelement gegenüber dem Niederhalterelement verstellbar und/oder gefedert angeordnet ist. Dadurch kann die Lage des Niederhalterelementes in der gekuppelten Stellung eingestellt werden und insbesondere Fertigungstoleranzen und/oder Verschleißerscheinungen ausgeglichen werden.

In Weiterführung der Erfindung kann vorgesehen sein, dass die Kupplungskugel unmittelbar mit dem Einschub verbindbar ist, wodurch besonders hohe Traglasten der erfindungsgemäßen Kupplung erreicht werden können.

Die Erfindung betrifft weiters einen Einschub für eine oben beschriebene Kupplung.

Weitere Aufgabe der Erfindung ist, einen Einschub der oben beschriebenen Art anzugeben, mit dem die beschriebenen Vorteile erreicht werden können und der einfach bei herkömmlichen Kupplungen, insbesondere Hubkupplungen, verwendet werden kann.

Erfindungsgemäß wird dies dadurch erreicht, dass ein Niederhalterelement an dem Einschub bewegbar, insbesondere verschwenkbar, gelagert ist.

Dadurch ergibt sich der Vorteil, dass neben der Kupplungskugel auch das Niederhalterelement an dem Einschub angeordnet ist und herkömmliche Hubkupplungen durch Anbringen des zweiten Anschlages einfach umgerüstet werden können.

Die Erfindung betrifft weiters ein Verfahren zum Kuppeln einer Zugöse mit einer oben genannten Kupplung mit einer Konsole, insbesondere einer Schwenkkonsole, und einem Einschub für die Konsole, wobei der Einschub in der Konsole um seine Längsachse verschiebbar gelagert ist und eine Aufnahme für eine Kupplungskugel aufweist, wobei der Einschub zu Beginn des Kupplungsvorgangs ausgefahren ist.

Weitere Aufgabe der Erfindung ist es ein Verfahren der oben beschriebenen Art anzugeben, bei dem die bekannten Nachteile vermieden sind, das einfach und schnell durchführbar ist, weitgehend automatisierbar ist und mit dem ein sicherer Halt der Zugöse erreichbar ist.

Erfindungsgemäß wird dies dadurch erreicht, dass beim Verbringen der Kupplung in einen gekuppelten Zustand ein erster Anschlag eines an dem Einschub bewegbar, insbesondere verschwenkbar, gelagerten Niederhalterelementes mit einem zweiten Anschlag der Kupplung, vorzugsweise der Konsole, insbesondere der Schwenkkonsole, in Kontakt gebracht wird und dass durch das Zusammenwirken der Anschläge das Niederhalterelement in einer die Zugöse haltenden geschlossenen Position gehalten wird.

Dadurch ergibt sich der Vorteil, dass durch das Anfahren des ersten Anschlags gegen den zweiten Anschlag das Niederhalterelement in die geschlossene Position gebracht wird und fixiert wird. Wird die Bewegung des Einschubes gesichert, so wird auch die Bewegung des Niederhalterelementes gesichert, wodurch eine zusätzliche eigene Sicherung der Lage des Niederhalterelementes in der geschlossenen Position nicht erforderlich erscheint.

In Weiterführung der Erfindung kann vorgesehen sein, dass das Niederhalterelement beim Einfahren des Einschubes mittels der Anschläge von einer die Zugöse freigebenden offenen Position in die geschlossene Position verbracht wird. Dadurch kann die Bewegung des Niederhalterelementes ohne zusätzliche Mittel auf einfache Weise sichergestellt werden.

Gemäß einer weiteren Ausführungsform der Erfindung kann vorgesehen sein, dass die Zugöse durch Bewegung des Niederhalterelementes von einer die Zugöse freigebenden offenen Position in Richtung der geschlossenen Position mittels eines Seilzugmechanismus auf der Kupplungskugel während zumindest eines Teiles des Kupplungsvorganges gehalten wird, wodurch nach dem Aufsetzen der Zugöse auf die Kupplungskugel die Zugöse gehalten werden kann und ein Abheben der Zugöse während des Kupplungsvorganges wirksam vermieden werden kann.

Die Erfindung wird unter Bezugnahme auf die beigeschlossenen Zeichnungen, in welchen Ausführungsformen dargestellt sind, näher beschrieben. Dabei zeigt:
Fig. 1 eine Seitenansicht einer ersten Ausführungsform einer erfindungsgemäßen Kupplung im gekuppelten Zustand;
Fig. 2 die Kupplung gemäß Fig. 1 in Draufsicht;
Fig. 3 die Kupplung gemäß Fig. 1 im Schrägriss;
Fig. 4 eine Seitenansicht der Kupplung gemäß Fig. 1, wobei der Einschub ein Stück ausgefahren ist;
Fig. 5 die Kupplung gemäß Fig. 4 in Draufsicht;
Fig. 6 die Kupplung gemäß Fig. 4 im Schrägriss;
Fig. 7 eine Seitenansicht der Kupplung gemäß Fig. 1, wobei der Einschub ein Stück ausgefahren und die Schwenkkonsole abgesenkt ist;
Fig. 8 die Kupplung gemäß Fig. 7 in Draufsicht;
Fig. 9 die Kupplung gemäß Fig. 7 im Schrägriss;
Fig. 10 eine Seitenansicht einer zweiten Ausführungsform einer erfindungsgemäßen Kupplung im gekuppelten Zustand;
Fig. 11 die Kupplung gemäß Fig. 10 in Draufsicht;
Fig. 12 die Kupplung gemäß Fig. 10 im Schrägriss;

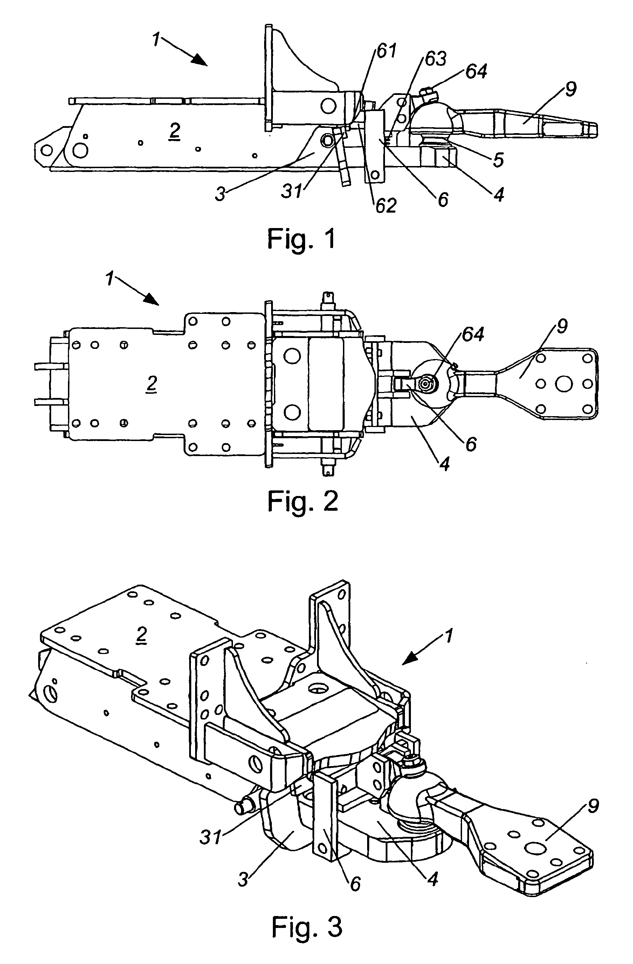

In den Fig. 1 bis 9 ist eine erste Ausführungsform einer erfindungsgemäßen Kupplung 1 dargestellt. Die Kupplung 1 ist als Hubkupplung mit einer Anbaukonsole 2 und einer Schwenkkonsole 3 ausgebildet. Derartige Hubkupplungen werden oftmals auch als Pick-Up-Hitch bezeichnet. Weiters ist ein Einschub 4 für die Schwenkkonsole 3 vorgesehen, wobei der Einschub 4 in der Schwenkkonsole 3 um seine Längsachse verschiebbar gelagert ist und eine Aufnahme für eine Kupplungskugel 5 aufweist.

Bei anderen erfindungsgemäßen Kupplungen 1 kann auch lediglich eine Anbaukonsole 2 vorgesehen sein, wobei der Einschub 4 in der Anbaukonsole 2 um seine Längsachse verschiebbar gelagert ist.

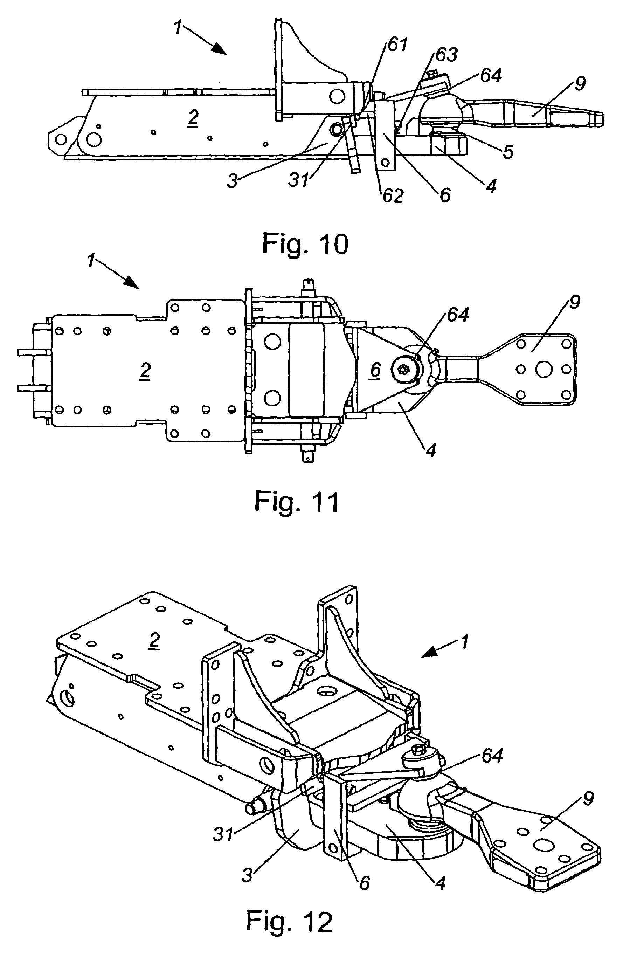

An dem Einschub 4 ist ein Niederhalterelement 6 bewegbar gelagert, wobei das Niederhalterelement 6 einen ersten Anschlag 61 umfasst. Der erste Anschlag 61 wirkt mit einem zweiten Anschlag 31 der Kupplung 1 zusammen, wobei das Niederhalterelement 6 in einem gekuppelten Zustand der Kupplung 1 mittels der Anschläge 31, 61 in einer eine Zugöse 9 haltenden geschlossenen Position gehalten ist. In den Fig. 1 bis 3 ist die gekuppelte Position der ersten Ausfiihrungsform und in den Fig. 10 bis 12 die gekuppelte Position einer zweiten Ausführungsform gezeigt, wobei das Niederhalterelement jeweils in der geschlossenen Position ist.

Der zweite Anschlag 31 kann, wie bei den gezeigten Ausführungsformen an der Schwenkkonsole 3 angeordnet sein. Bei anderen Ausführungsformen kann er auch an der Anbaukonsole 2 oder einem anderen Teil der Kupplung 1, gegen das der Einschub 4 bewegbar ist, angeordnet sein.

Das Niederhalterelement 6 ist vorzugsweise an dem Einschub 4 verschwenkbar gelagert. Bei anderen Ausführungsformen kann das Niederhalterelement 6 gegenüber dem Einschub 4 auch verschiebbar sein.

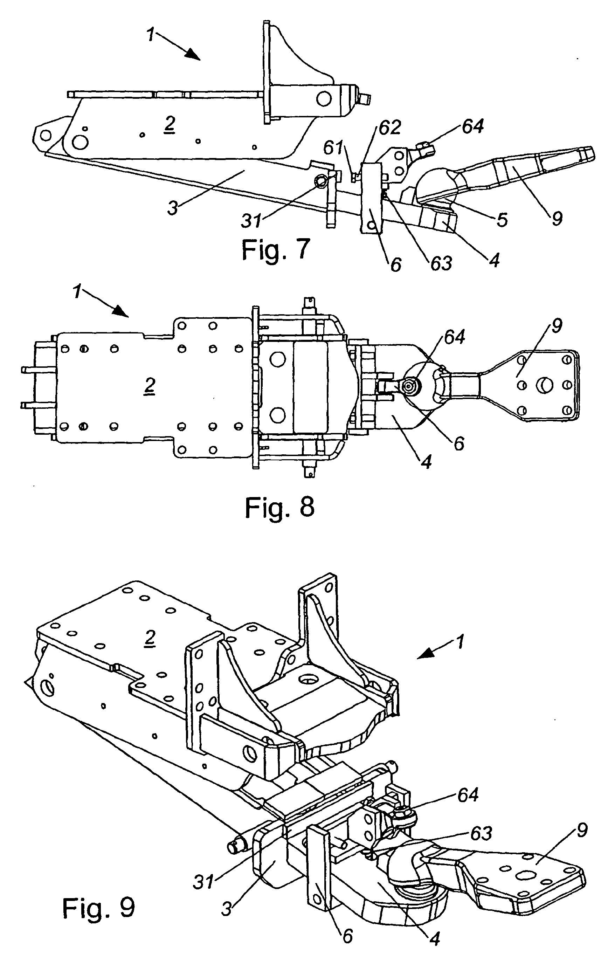

Vor dem Einkuppeln wird der Einschub 4 ausgefahren und gegebenenfalls die Schwenkkonsole 3 abgesenkt. Dann wird die Zugöse 9 auf die Kupplungskugel 5 aufgesetzt. Diese Position ist in den Fig. 7 bis 9 dargestellt.

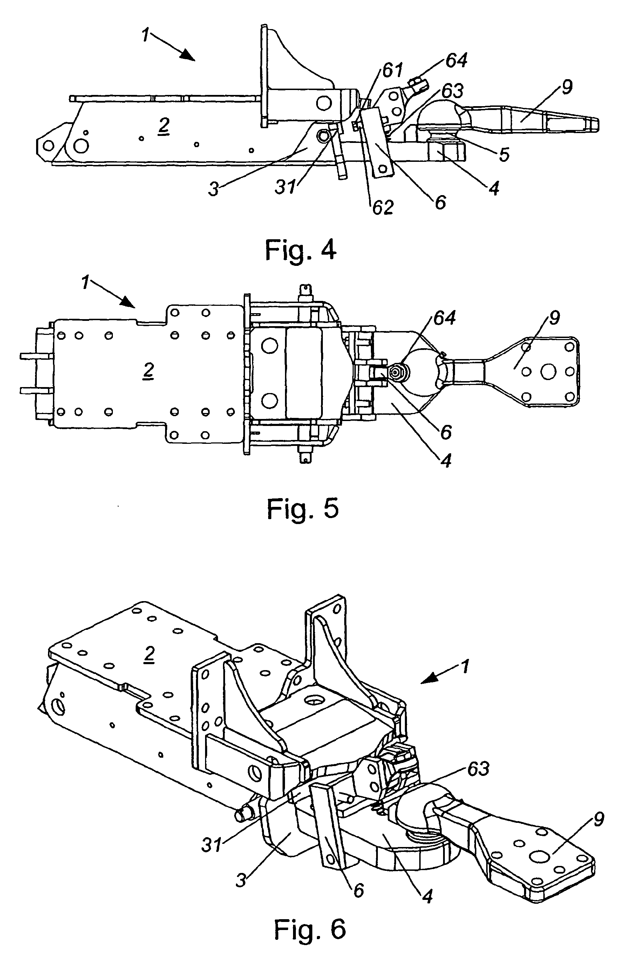

Anschließend wird beim Verbringen der Kupplung 1 in den gekuppelten Zustand der erste Anschlag 61 mit dem zweiten Anschlag 31 in Kontakt gebracht und durch das Zusammenwirken der Anschläge 31, 61 das Niederhalterelement 6 in der geschlossenen Position gehalten. In den Fig. 4 bis 6 ist der Einschub 4 ein Stück ausgefahren, wobei das Niederhalterelement 6 die Zugöse 9 freigibt.

Das Aufsetzen der Zugöse 9 auf die Kupplungskugel wird erleichtert, wenn das Niederhalterelement 6 mittels eines Federelementes 63 in Richtung einer die Zugöse 9 freigebenden offenen Position federbelastet ist. Dadurch kann sichergestellt werden, dass das Niederhalterelement 6 die Kupplungskugel 5 freigibt und die Zugöse 9 auf die Kupplungskugel 5 aufgesetzt werden kann.

Wird der Kupplungsvorgang so durchgeführt, dass das Niederhalterelement 6 in der offenen Position ist und beim Einfahren des Einschubes 4 mittels der Anschläge 31, 61 von der offenen Position in die geschlossene Position gebracht wird, so kann es vorkommen, dass die Zugöse 9 während des Kupplungsvorganges von der Kupplungskugel 5 abgehoben wird, bevor das Niederhalterelement 6 in die geschlossene Position gebracht wird, und der Kupplungsvorgang wiederholt werden muss.

Dies kann vermieden werden, wenn ein Seilzugmechanismus zum Betätigen des Niederhalterelementes 6 vorgesehen ist. Dann kann das Niederhalterelement 6 mittels des Seilzugmechanismus von der offenen Position in Richtung der geschlossenen Position bewegt werden, wodurch die Zugöse 9 besser auf der Kupplungskugel 5 gehalten wird. Der Seilzugmechanismus kann unmittelbar nach dem Aufsetzen der Zugöse 9 oder auch später betätigt werden. Dabei ist es nicht erforderlich, dass das Niederhalterelement 6 durch den Seilzugmechanismus bis in die geschlossene Position gebracht wird, da lediglich ein Abheben der Zugöse 9 verhindert werden soll. Das Niederhalterelement 6 kann anschließend durch das Zusammenwirken der Anschläge 31, 61 in die geschlossene Position gebracht werden.

Der erste Anschlag 61 kann auf einem Anschlagelement 62 ausgebildet sein, welches gegenüber dem Niederhalterelement 6 verstellbar und/oder gefedert angeordnet ist. Dadurch kann das Zusammenwirken des ersten Anschlags 61 und des zweiten Anschlags 31 eingestellt werden und Fertigungstoleranzen und/oder Verschleiß ausgeglichen werden, wodurch ein einwandfreies Funktionieren der erfindungsgemäßen Kupplung 1 sichergestellt werden kann. Weiters kann auf einfache Weise ein Austauschen des Anschlagelementes 62 vorgesehen sein, wodurch der Einschub 4 mit unterschiedlichen Konsolen 2, 3 zusammenwirken kann, bei denen der zweite Anschlag 31 unterschiedlich ausgebildet ist.

Zum Erreichen hoher Stützlasten, wie sie für Anhänger in der Landwirtschaft und bei Lastkraftwagen üblich sind, erscheint es vorteilhaft, wenn die Kupplungskugel 5 unmittelbar mit dem Einschub 4 verbindbar ist. In anderen Ausführungsformen kann auch vorgesehen sein, dass die Kupplungskugel einstückig mit dem Einschub 4 verbunden ist.

Im Betrieb entsteht zwischen der Auflagefläche des Niederhalterelementes 6 und der Zugöse 9 Abrieb, wobei vorzugsweise das Material der Auflagefläche so gewählt ist, dass an dem Niederhalterelement 6 ein größerer Abrieb entsteht und das Niederhalterelement 6 als Verschleißteil ausgebildet ist. Die Instandhaltungskosten können gering gehalten werden, wenn ein Niederhaltereinsatz 64 zum Eingriff mit der Zugöse 9 in der geschlossenen Position vorgesehen ist, wobei der Niederhaltereinsatz 64 lösbar mit dem Niederhalterelement 6 verbunden ist. Dadurch ist nur der Niederhaltereinsatz 64 und nicht das gesamte Niederhalterelement 6 als Verschleißteil ausgebildet. Weiters kann für das Niederhalterelement 6 ein hochfestes Material zur Erreichung einer hohen Stabilität und

Festigkeit und für das Niederhalterelement 64 ein Material mit guten Gleiteigenschaften für die Zugöse 9 gewählt werden. Auf diese Weise können gute Gleiteigenschaften und eine hohe Festigkeit erreicht werden.

Der Niederhaltereinsatz 64 kann gegenüber dem Niederhalterelement 6 verstellbar sein, wodurch der Spalt zwischen dem Niederhaltereinsatz 64 und der Zugöse 9 individuell eingestellt und auf ein vorgebbares Maß beschränkt werden kann. Dadurch kann die Lebensdauer des Niederhaltereinsatzes 64 erhöht werden, da Verschleiß durch Nachjustieren des Niederhaltereinsatzes 64 ausgeglichen werden kann. Weiters können höhere Herstellungstoleranzen für die Zugöse 9 und die Kupplung 1 vorgesehen werden. Dabei kann der Niederhaltereinsatz 64 als Niederhalterschraube ausgebildet sein, wie in den Fig. 1 bis 9 dargestellt.

Weiters kann vorgesehen sein, dass das Niederhalterelement 64 gegenüber dem Niederhalterelement 6 gefedert gelagert ist. Beispielsweise kann diese Federung mittels Tellerfedern erreicht werden. Ein derartiges Niederhalterelement 64 ist in den Fig. 10 bis 12 gezeigt.

Beim Verriegeln und Entriegeln der Kupplung 1, insbesondere bei einer Ausführung als Hubkupplung, ist es üblicherweise erforderlich, die Schwenkkonsole 3 zumindest kurzzeitig in eine Richtung zu bewegen, die den Niederhaltereinsatz 64 stärker gegen die Zugöse 9 drückt als im Betriebszustand. Um dies zu ermöglichen, kann eine nachgiebige Konstruktion vorgesehen sein. Dies kann beispielsweise durch eine gefederte Lagerung des Anschlagelementes 62 und/oder durch die gefederte Lagerung des Niederhaltereinsatzes 64 erreicht werden. In anderen Ausführungsformen kann auch vorgesehen sein, dass der Niederhaltereinsatz 64 erst nach dem Verriegeln der Kupplung 1 eingestellt wird und vor dem Entriegeln der Abstand zwischen der Zugöse 9 und dem Niederhaltereinsatz 64 vergrößert wird. Alternativ kann auch das Anschlagelement 62 verstellt werden.

In der Beschreibung wurde näher auf den Einkuppelvorgang eingegangen. Für einen Fachmann ist selbstverständlich, dass der Auskuppelvorgang analog dem Einkuppelvorgang in umgekehrter Reihenfolge erfolgt.

## Patentansprüche

1. Kupplung (1), insbesondere Hubkupplung, mit einer Konsole (2, 3), insbesondere einer Schwenkkonsole (3), und einem Einschub (4) für die Konsole (2, 3), wobei der Einschub (4) in der Konsole (2, 3) um seine Längsachse verschiebbar gelagert ist und eine Aufnahme für eine Kupplungskugel (5) aufweist, **dadurch gekennzeichnet, dass** ein Niederhalterelement (6) an dem Einschub (4) bewegbar, insbesondere verschwenkbar, gelagert ist und dass das Niederhalterelement (6) einen ersten Anschlag (61) umfasst, wobei der erste Anschlag (61) mit einem zweiten Anschlag (31) der Kupplung (1), vorzugsweise der Konsole (2, 3), insbesondere der Schwenkkonsole (3), zusammenwirkt, und dass das Niederhalterelement (6) in einem gekuppelten Zustand der Kupplung (1) mittels der Anschläge (31, 61) in einer eine Zugöse (9) haltenden geschlossenen Position gehalten ist.

2. Kupplung (1) nach Anspruch 1, **dadurch gekennzeichnet, dass** das Niederhalterelement (6) mittels eines Federelementes (63) in Richtung einer die Zugöse (9) freigebenden offenen Position federbelastet ist.

3. Kupplung (1) nach Anspruch 1 oder 2, **dadurch gekennzeichnet, dass** ein Seilzugmechanismus zum Betätigen des Niederhalterelementes (6) vorgesehen ist.

4. Kupplung (1) nach Anspruch 1, 2 oder 3, **dadurch gekennzeichnet, dass** ein Niederhaltereinsatz (64) zum Eingriff mit der Zugöse (9) in der geschlossenen Position vorgesehen ist und dass der Niederhaltereinsatz (64) lösbar mit dem Niederhalterelement (6) verbunden ist.

5. Kupplung (1) nach Anspruch 4, **dadurch gekennzeichnet, dass** der Niederhaltereinsatz (64) gegenüber dem Niederhalterelement (6) verstellbar ist.

6. Kupplung (1) nach Anspruch 4 oder 5, **dadurch gekennzeichnet, dass** der Niederhaltereinsatz (64) gegenüber dem Niederhalterelement (6) gefedert gelagert ist.

7. Kupplung (1) nach einem der Ansprüche 1 bis 6, **dadurch gekennzeichnet, dass** der erste Anschlag (61) auf einem Anschlagelement (62) ausgebildet ist und dass das Anschlagelement (62) gegenüber dem Niederhalterelement (6) verstellbar und/oder gefedert angeordnet ist.

8. Kupplung (1) nach einem der Ansprüche 1 bis 7, **dadurch gekennzeichnet, dass** die Kupplungskugel (5) unmittelbar mit dem Einschub (4) verbindbar ist.

9. Einschub (4) für eine Kupplung (1) gemäß einem der Ansprüche 1 bis 8, **dadurch gekennzeichnet, dass** ein Niederhalterelement (6) an dem Einschub (4) bewegbar, insbesondere verschwenkbar, gelagert ist.

10. Verfahren zum Kuppeln einer Zugöse (9) mit einer Kupplung (1) nach einem der Ansprüche 1 bis 9 mit einer Konsole (2, 3), insbesondere einer Schwenkkonsole (3), und einem Einschub (4) für die Konsole (2, 3), wobei der Einschub (4) in der Konsole (2, 3) um seine Längsachse verschiebbar gelagert ist und eine Aufnahme für eine Kupplungskugel (5) aufweist, wobei der Einschub (4) zu Beginn des Kupplungsvorgangs ausgefahren ist, **dadurch gekennzeichnet, dass** beim Verbringen der Kupplung (1) in einen gekuppelten Zustand ein erster Anschlag (61) eines an dem Einschub (4) bewegbar, insbesondere verschwenkbar, gelagerten Niederhalterelementes (6) mit einem zweiten Anschlag (31) der Kupplung (1), vorzugsweise der Konsole (2, 3), insbesondere der Schwenkkonsole (3), in Kontakt gebracht wird und dass durch das Zusammenwirken der Anschläge (31, 61) das Niederhalterelement (6) in einer die Zugöse (9) haltenden geschlossenen Position gehalten wird.

11. Verfahren nach Anspruch 10, **dadurch gekennzeichnet, dass** das Niederhalterelement (6) beim Einfahren des Einschubes (4) mittels der Anschläge (31, 61) von einer die Zugöse (9) freigebenden offenen Position in die geschlossene Position verbracht wird.

12. Verfahren nach Anspruch 10, **dadurch gekennzeichnet, dass** die Zugöse (9) durch Bewegung des Niederhalterelementes (6) von einer die Zugöse (9) freigebenden offenen Position in Richtung der geschlossenen Position mittels eines Seilzugmechanismus auf der Kupplungskugel (1) während zumindest eines Teiles des Kupplungsvorganges gehalten wird.

## Claims

1. A trailer hitch (1), especially a lifting hitch, comprising a bracket (2, 3), especially a swiveling bracket (3), and an insert (4) for the bracket (2, 3), with the insert (4) into the bracket (2, 3) being held so as to be displaceable about its longitudinal axis and comprising a receiver for a coupling ball (5), **characterized in that** a retaining element (6) is held on the insert (4) in a movable and especially swivelable manner, and that the retaining element (6) comprises a first stop (61), with the first stop (61) cooperating with a second stop (31) of the trailer hitch (1), preferably the bracket (2, 3), especially the swiveling bracket (3), and that the retaining element (6) is held in a coupled state of the trailer hitch (1) in a closed position holding a drawbar eye (9) by means of the stops (31, 61).

2. A trailer hitch (1) according to claim 1, **characterized in that** the retaining element (6) is spring-loaded by means of a spring element (63) in the direction of an opened position releasing the drawbar eye (9).

3. A trailer hitch (1) according to claim 1 or 2, **characterized in that** a linkage mechanism is provided for actuating the retaining element (6).

4. A trailer hitch (1) according to claim 1, 2 or 3, **characterized in that** a retaining insert (64) is provided for engaging with the drawbar eye (9) in the closed position and that the retaining insert (64) is detachably connected with the retaining element (G).

5. A trailer hitch (1) according to claim 4, **characterized in that** the retaining insert (64) is adjustable relative to the retaining element (6).

6. A trailer hitch (1) according to claim 4 or 5, **characterized in that** the retaining insert (64) is held in a spring-mounted manner relative to the retaining element (6).

7. A trailer hitch (1) according to one of the claims 1 to 6, **characterized in that** the first stop (61) is formed on a stop element (62) and that the stop element (62) is arranged in an adjustable and/or spring-mounted manner relative to the retaining element (6).

8. A trailer hitch (1) according to one of the claims 1 to 7, **characterized in that** the coupling ball (5) can be connected directly with the insert (4).

9. An insert (4) for a trailer hitch (1) according to one of the claims 1 to 8, **characterized in that** a retaining element (6) is held in a movable and especially swivelable manner on the insert (4).

10. A method for coupling a drawbar eye (9) with a trailer hitch (1) according to one of the claims 1 to 9, comprising a bracket (2, 3), especially a swiveling bracket (3), and an insert (4) for the bracket (2, 3), with the insert (4) being held in the bracket (2, 3) in a displaceable manner about its longitudinal axis, with the insert (4) being extended at the beginning of the coupling process, **characterized in that** during the movement of the trailer hitch (1) to the coupled state a first stop (61) of a retaining element (6) which is movably and especially swivelably held on the insert (4) is brought into contact with a second stop (31) of the trailer hitch (1), preferably the bracket (2, 3), especially the swiveling bracket (3), and that by the cooperation of the stops (31, 61) the retaining element (6) is held in a closed position holding the drawbar eye (9).

11. A method according to claim 10, **characterized in that** the retaining element (6) is moved during the insertion of the insert (4) by means of the stops (31, 61) from an opened position releasing the drawbar eye (9) to the closed position.

12. A method according to claim 10, **characterized in that** the drawbar eye (9) is held on the coupling ball (1) by movement of the retaining element (6) from an opened position releasing the drawbar eye (9) in the direction towards the closed position by means of a linkage mechanism during at least a part of the coupling process.

## Revendications

1. Attelage (1), notamment attelage de relevage, avec une console (2, 3), notamment une console pivotante (3) et avec un élément d'insertion (4) pour la console (2, 3), l'élément d'insertion, (4) dans la console (2, 3) étant monté mobile en coulissement sur son axe longitudinal et comportant un logement pour une rotule d'attelage (5), **caractérisé en ce qu'**un élément abaisseur (6) est monté mobile, notamment pivotant, sur l'élément d'insertion (4) et que l'élément abaisseur (6) comprend une première butée (61), la première butée (61) coopérant avec une deuxième butée (31) de l'attelage (1), de préférence de la console (2, 3), notamment de la console pivotante (3), et que l'élément abaisseur (6) est maintenu dans une position fermée de retenue d'un anneau de traction (9) moyennant les butées (31, 61) à l'état accouplé de l'attelage (1).

2. Attelage (1) selon la revendication 1, **caractérisé en ce que** l'élément abaisseur (6) est sollicité par un élément ressort (63) vers une position ouverte libérant l'anneau de traction (9).

3. Attelage (1) selon la revendication 1 ou 2, **caractérisé en ce qu'**un mécanisme de câble coulissant est prévu pour actionner l'élément abaisseur (6).

4. Attelage (1) selon la revendication 1, 2 ou 3, **caractérisé en ce qu'**un insert abaisseur (64) destiné à se mettre en prise avec l'anneau de traction (9) est prévu en position fermée et que l'insert abaisseur (64) est relié de façon amovible à l'élément abaisseur (6).

5. Attelage (1) selon la revendication 4, **caractérisé en ce que** l'insert abaisseur (64) est réglable par rapport à l'élément abaisseur (6).

6. Attelage (1) selon la revendication 4 ou 5, **caractérisé en ce que** l'insert abaisseur (64) est monté sur ressorts par rapport à l'élément abaisseur (6).

7. Attelage (1) selon l'une quelconque des revendications 1 à 6, **caractérisé en ce que** la première butée (61) est formée sur un élément butée (62) et que l'élément butée (62) est monté de façon réglable et/ou sur ressorts par rapport à l' élément abaisseur (6).

8. Attelage (1) selon l'une quelconque des revendications 1 à 7, **caractérisé en ce que** la rotule d'attelage (5) est apte à être reliée directement à l'élément d'insertion (4).

9. Elément d'insertion (4) pour un attelage (1) selon l'une quelconque des revendications 1 à 8, **caractérisé en ce qu'**un élément abaisseur (6) est monté mobile, notamment pivotant, sur l'élément d'insertion (4).

10. Procédé d'accouplement d'un anneau de traction (9) avec un attelage (1) selon l'une quelconque des revendications 1 à 9, avec une console (2, 3), notamment une console pivotante (3), et un élément d'insertion (4) pour la console (2, 3), l'élément d'insertion (4) dans la console (2, 3) étant monté mobile en coulissement sur son axe longitudinal et comportant un logement pour une rotule d'attelage (5), l'élément d'insertion (4) se trouvant dans une position sortie au début du processus d'attelage, **caractérisé en ce que**, lorsqu'on amené l'attelage (1) dans un état accouplé, une première butée (61) d'un élément abaisseur (6) monté mobile, notamment pivotant, sur l'élément d'insertion (4) est amené en contact avec une deuxième butée (31) de l'attelage (1), de préférence de la console (2, 3), notamment de la console pivotante (3), et que l'élément abaisseur (6) est maintenu dans une position fermée de retenue de l'anneau de traction (9) par la coopération des butées (31, 61).

11. Procédé selon la revendication 10, **caractérisé en ce que** l'élément abaisseur (6) est amené par les butées (31, 61) d'une position ouverte libérant l'anneau de traction (9) dans la position fermée lorsque l'élément d'insertion (4) rentre dans la console.

12. Procédé selon la revendication 10, **caractérisé en ce que** l'anneau de traction (9) est retenu sur la rotule d'attelage (1) pendant au moins une partie du processus d'attelage par le mouvement de l'élément abaisseur (6) passant d'une position ouverte libérant l'anneau de traction (9) à la position fermée au moyen d'un mécanisme de câble coulissant.
